(19) Europäisches Patentamt
European Patent Office
Office européen des brevets

(11)  EP 2 340 282 B1

(12)  FASCICULE DE BREVET EUROPEEN

(45) Date de publication et mention
de la délivrance du brevet:
**20.11.2013 Bulletin 2013/47**

(51) Int Cl.:
**C08L 53/00** (2006.01)      **C08L 67/04** (2006.01)
**C08L 101/16** (2006.01)     **C08L 33/12** (2006.01)

(21) Numéro de dépôt: **09755983.5**

(22) Date de dépôt: **07.10.2009**

(86) Numéro de dépôt international:
**PCT/FR2009/051912**

(87) Numéro de publication internationale:
**WO 2010/040955 (15.04.2010 Gazette 2010/15)**

(54)  **COMPOSITION RENFERMANT UN POLYMERE METHACRYLIQUE ET UNE HOMOPOLYMER D'ACIDE LACTIQUE**

ZUSAMMENSETZUNG MIT EINEM METHACRYLPOLYMER UND MILCHSÄURE-HOMOPOLYMER

COMPOSITION CONTAINING A METHACRYLIC POLYMER AND A LACTIC ACID HOMOPOLYMER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.10.2008 FR 0856769**

(43) Date de publication de la demande:
**06.07.2011 Bulletin 2011/27**

(73) Titulaire: **Arkema France**
**92700 Colombes (FR)**

(72) Inventeurs:
• **GERARD, Pierre**
**F-64230 Denguin (FR)**
• **LAMBERT, Pierre-Louis**
**F-33200 BORDEAUX (FR)**

(56) Documents cités:
**EP-A1- 1 953 191**

**Description**

La présente invention est relative à une composition méthacrylique transparente comprenant du carbone d'origine renouvelable, et possédant une fluidité et une résistance chimique améliorée. Cette composition peut être utilisée notamment dans le domaine de l'emballage, de la cosmétique, de l'électronique, de l'électroménager, de l'automobile ou du bâtiment, et répond aux critères de chimie verte dans un cadre plus général de développement durable. L'invention a aussi pour objet l'utilisation d'un polymère d'acide lactique pour augmenter la fluidité et la résistance chimique d'une matrice de polymère méthacrylique.

Dans le domaine de l'emballage, de la cosmétique, de l'électronique et de l'électroménager, le polyméthacrylate de méthyle (PMMA), connu sous les marques Plexiglas® et Altuglas®, se distingue des autres matières plastiques par ses excellentes propriétés optiques et esthétiques, sa durabilité et une dureté de surface remarquable.

Le PMMA se présente sous forme de poudres, de granulés, de pastilles ou de plaques, les poudres ou granulés servant au moulage d'articles divers tels que des articles ménagers et de bureau, des emballages de produits cosmétiques, et les plaques trouvant leur utilisation dans les enseignes et présentoirs, dans des domaines divers.

La productivité des procédés de transformation du PMMA, tel que le moulage par injection ou extrusion ou co-extrusion est généralement liée à la fluidité à chaud du grade de PMMA mis en forme. Il existe un besoin permanent d'un grade de PMMA ayant une fluidité améliorée pour pouvoir diminuer les temps de cycle et augmenter la productivité des procédés de mise en forme.

Pour certaines applications, par exemple dans le domaine de l'emballage de produits cosmétique, le PMMA doit présenter en plus une résistance chimique face à des agents fissurants tels que des solvants polaires et apolaires, des hydrocarbures, des huiles ou des parfums.

Il existe donc un besoin d'un matériau polymère qui possède à la fois une fluidité accrue et résiste mieux à des agents fissurants, par exemple de type alcool, tout en gardant de bonnes propriétés optiques (une bonne transparence), mécaniques (résistance à l'impact) et de surface (résistance aux rayures et à l'abrasion), comparables à celles du PMMA de référence, ainsi que des propriétés thermiques compatibles avec les applications envisagées.

Il est connu d'améliorer la fluidité d'un PMMA en limitant sa masse moléculaire ou en rajoutant un co-monomère lors de la polymérisation du méthacrylate de méthyle. A cet effet, sont employés des co-monomères de type acrylates d'alkyle.

A l'inverse, afin d'augmenter la résistance chimique d'un PMMA, il est préférable d'atteindre de hautes masses moléculaires ou de limiter la présence de co-monomère acrylique. Il est possible aussi de réticuler le PMMA pour améliorer sa résistance chimique, mais dans ce cas, il devient difficilement utilisable dans les procédés de transformation classiques des thermoplastiques pour les applications ciblées.

Le but de la présente invention est de remédier aux inconvénients précités.

Par ailleurs, aujourd'hui, les consommateurs sont de plus en plus attirés par les produits d'origine naturelle qui ont la réputation d'être plus sûrs et moins polluants pour l'environnement.

En effet, les matières premières utilisées pour la synthèse de la plupart des matériaux thermoplastiques sont obtenues par vapocraquage ou craquage catalytique de coupes pétrolières. L'utilisation de ces matières contribue à l'augmentation de l'effet de serre. Etant donnée la diminution des réserves pétrolières mondiales, la source de ces matières premières va peu à peu s'épuiser.

Les matières premières issues de la biomasse sont de source renouvelable et ont un impact réduit sur l'environnement. Elles ne nécessitent pas toutes les étapes de raffinage (très coûteuses en énergie) des produits pétroliers. La production de $CO_2$ est réduite de sorte qu'elles contribuent moins au réchauffement climatique.

Il apparaît donc nécessaire de disposer de matériaux non dépendants de matière première d'origine fossile, mais utilisant plutôt des matières premières d'origine renouvelable.

La présente invention a donc pour but de fournir un matériau méthacrylique qui répond aux différentes exigences énoncées ci-dessus, aussi bien en terme de propriétés essentielles du PMMA ainsi que de fluidité et de résistance chimique, qu'en terme d'éthique écologique et biologique.

Il a été trouvé de manière surprenante, que l'ajout d'un polymère d'acide lactique (PLA polyacide lactique) dans une matrice de PMMA, permettait de conserver les propriétés essentielles du PMMA (transparence, rigidité, dureté de surface) tout en améliorant sa fluidité et sa résistance chimique.

L'acide lactique est un précurseur dégradable, biocompatible (bio-assimilable) et bio-recyclable de polymères connus sous les noms d'acide polylactique ou poly(acide lactique) ou polylactide ou PLA. Il est issu de ressources renouvelables et est produit en utilisant des biotechnologies, généralement par fermentation du maïs. Même si les polymères PLA présentent l'avantage d'être des bio-matériaux possédant certaines propriétés intéressantes, leur développement reste toutefois limité, essentiellement en raison de leur coût élevé et de leurs propriétés mécaniques et thermiques insuffisantes pour une utilisation par exemple dans le secteur de l'emballage. Différentes solutions ont été recherchées pour améliorer et renforcer les propriétés de PLA, une des solutions consistant notamment à ajouter une certaine quantité de PMMA ; cependant, la résistance thermique et la résistance aux chocs des matrices à base de PLA renforcées par du PMMA nécessitent souvent d'être améliorées, par exemple par incorporation d'un modifiant choc. Ce modifiant choc, en raison de sa taille et de son indice optique diffuse la lumière une fois introduit dans la matrice de PLA, ce qui peut affecter la transparence du mélange.

Il est connu que le PMMA et le PLA amorphe (polyacide lactique possédant moins de 93% d'isomère L acide lactique) sont deux polymères miscibles, quelle que soit la composition du mélange et quelle que soit la température, le mélange de ces deux polymères permettant d'obtenir une composition complètement transparente (Eguiburu, J.L. ; Iruin, J.J. ; Fernandez-Berridi, M.J. ; San Roman, J. Polymer, 1998, 39 (26), 6891-6897 ; Zhang, G. ; Zhang, J. ; Wang, S. ; Shen, D. Journal of Polymer Science: Part B: Polymer Physics, 2003, 41, 23-30).

Cependant, l'effet obtenu par l'incorporation d'un PLA dans une matrice de PMMA sur la fluidité ou la résistance chimique n'a jamais été observé.

La présente invention a donc pour objet une composition transparente, fluide et résistante chimiquement comprenant :

- de 95% à 50% en poids d'un polymère méthacrylique
- de 5% à 50% en poids d'un homopolymère d'acide lactique (PLA) sur le poids total de la composition.

Avantageusement, la composition comprend de 10% à 40% de PLA, plus avantageusement de 15% à 30% de PLA, de préférence de 20% à 25% de PLA.

Un autre objet de la présente invention porte sur l'utilisation d'une quantité efficace et suffisante d'un homopolymère d'acide lactique pour augmenter la fluidité et la résistance chimique d'une matrice de polymère méthacrylique.

Il a été constaté qu'une teneur trop faible en PLA ne permet pas d'améliorer la résistance chimique du polymère méthacrylique. A l'inverse, une quantité trop importante de PLA conduit à des mélanges ayant une fluidité accrue, mais de propriétés thermiques insuffisantes pour les applications envisagées. Avantageusement, la quantité efficace de PLA s'est avérée allant de 5 à 50% en poids, en particulier allant de 10% à 40% de PLA, avantageusement allant de 15% à 30%, de préférence allant de 20% à 25%.

L'invention porte aussi sur l'utilisation de la composition précitée pour la fabrication d'articles ménagers, tels que des capots de téléviseurs, les couvercles des appareils électriques ou électroniques, des écrans plats d'ordinateurs, du mobilier d'intérieur, du mobilier urbain, des articles destinés à l'emballage, notamment dans le domaine de la cosmétique, des pièces automobiles telles que des lentilles de planches de bord, des feux arrières, des pièces d'habillage extérieur, des enseignes lumineuses, des profilés.

Un autre objet de l'invention porte sur un procédé de fabrication d'un objet destiné au domaine de l'emballage, de la cosmétique, de l'électronique, de l'électroménager, de l'automobile ou du bâtiment, à partir de la composition précitée comprenant une étape de moulage par injection, extrusion ou co-extrusion de ladite composition.

Le domaine d'application préféré est celui de l'emballage, notamment celui de la cosmétique.

Description détaillée de l'invention

La présente invention fournit une composition d'une matrice de polymère méthacrylique comprenant du carbone d'origine renouvelable.

Une matière première renouvelable est une ressource naturelle, animale ou végétale, dont le stock peut se reconstituer sur une période courte à l'échelle humaine. Il faut en particulier que ce stock puisse se renouveler aussi vite qu'il est consommé.

L'utilisation de matières premières d'origine naturelle et renouvelable peut se détecter grâce aux atomes de carbone entrant dans la composition du produit final. En effet, à la différence des matériaux issus de matières fossiles, les matières premières renouvelables contiennent du $^{14}C$ dans les mêmes proportions que le $CO_2$ atmosphérique. Tous les échantillons de carbone tirés d'organismes vivants (animaux ou végétaux) sont en fait un mélange de 3 isotopes : $^{12}C$ (représentant environ 98,892 %), $^{13}C$ (environ 1,108 %) et $^{14}C$ (traces 1,2.10$^{-10}$ %). Le rapport $^{14}C/^{12}C$ des tissus vivants est identique à celui de l'atmosphère. Dans l'environnement, le $^{14}C$ existe sous deux formes prépondérantes : sous forme minérale, c'est-à-dire de gaz carbonique ($CO_2$), et sous forme organique, c'est-à-dire de carbone intégré dans des molécules organiques.

Dans un organisme vivant, le rapport $^{14}C/^{12}C$ est maintenu constant par le métabolisme car le carbone est continuellement échangé avec l'environnement. La proportion de $^{14}C$ étant constante dans l'atmosphère, il en est de même dans l'organisme, tant qu'il est vivant, puisqu'il absorbe ce $^{14}C$ comme il absorbe le $^{12}C$. Le rapport moyen de $^{14}C/^{12}C$ est égal à 1,2x10$^{-12}$, pour une matière d'origine renouvelable, tandis qu'une matière première fossile a un rapport nul.

Le $^{12}C$ est stable, c'est-à-dire que le nombre d'atomes de $^{12}C$ dans un échantillon donné est constant au cours du temps. Le $^{14}C$, lui, est radioactif et chaque gramme de carbone d'un être vivant contient suffisamment d'isotopes $^{14}C$ pour donner 13,6 désintégrations par minute.

La demi-vie (ou période) $T_{1/2}$, reliée à la constante de désintégration du $^{14}C$ est de 5730 ans. Compte tenu de cette durée, on considère que la teneur en $^{14}C$ est sensiblement constante depuis l'extraction des matières premières renouvelables, jusqu'à la fabrication des « biomatériaux » issus de ces matières premières, et même jusqu'à la fin de leur utilisation.

La composition selon l'invention comprend de 5% à 50% en poids d'un homopolymère d'acide lactique, elle est caractérisée en ce qu'elle contient au moins 1% de carbone d'origine renouvelable, de préférence au moins 20% de carbone d'origine renouvelable.

La demanderesse considère qu'un produit ou un polymère est issu de matières premières renouvelables s'il contient au moins 20% ($0,24.10^{-12}$ / $1,2.10^{-12}$} en masse de C d'origine renouvelable sur la masse totale de carbone. Autrement dit, un produit ou un polymère est issu de matières premières renouvelables s'il contient au moins $0,24.10^{-10}$% en masse de $^{14}C$.

La composition de l'invention pourra même contenir 100% de carbone d'origine renouvelable, ce qui consolide alors la nature « bio » de ladite composition, dans le cas où le polymère méthacrylique est lui-même d'origine naturelle non fossile, comme décrit par exemple dans la demande de brevet FR 08.53588.

A l'heure actuelle, il existe au moins deux techniques différentes pour la mesure de la teneur en $^{14}C$ d'un échantillon :

- par spectrométrie à scintillation liquide : cette méthode consiste à compter des particules 'Béta' issues de la désintégration du $^{14}C$. On mesure le rayonnement Béta issu d'un échantillon de masse connue (nombre d'atomes de carbone connu) pendant un certain temps. Cette 'radioactivité' est proportionnelle au nombre d'atomes de $^{14}C$, que l'on peut ainsi déterminer. Le $^{14}C$ présent dans l'échantillon émet des rayonnements ß-, qui au contact du liquide scintillant (scintillateur) donnent naissance à des photons. Ces photons ont des énergies différentes (comprises entre 0 et 156 Kev) et forment ce que l'on appelle un spectre de $^{14}C$. Selon deux variantes de cette méthode, l'analyse porte soit sur le $CO_2$ préalablement produit par l'échantillon carboné dans une solution absorbante appropriée, soit sur le benzène après conversion préalable de l'échantillon carboné en benzène.
- par spectrométrie de masse : l'échantillon est réduit en graphite ou en $CO_2$ gazeux, analysé dans un spectromètre de masse. Cette technique utilise un accélérateur et un spectromètre de masse pour séparer les ions $^{14}C$ des $^{12}C$ et donc déterminer le rapport des deux isotopes.

Ces méthodes de mesure de la teneur en $^{14}C$ des matériaux sont décrites précisément dans les normes ASTM D 6866 (notamment D6866-06) et dans les normes ASTMD 7026 (notamment 7026-04). Ces méthodes mesurent le rapport $^{14}C/^{12}C$ d'un échantillon et le comparent avec le rapport $^{14}C/^{12}C$ d'un échantillon référence d'origine 100% renouvelable, pour donner un pourcentage relatif de carbone d'origine renouvelable dans l'échantillon.

La méthode de mesure préférentiellement utilisée dans le cas de la présente invention est la spectrométrie de masse décrite dans la norme ASTM D6866-06 (« accelerator mass spectroscopy »).

Selon l'invention, le polymère méthacrylique est un homo- ou copolymère de méthacrylate de méthyle (MAM) comprenant en poids au moins 70%, avantageusement au moins 80% de MAM. Le copolymère est obtenu à partir de MAM et d'au moins un co-monomère ayant au moins une insaturation éthylénique copolymérisable avec le MAM par un mécanisme radicalaire.

De préférence, le polymère méthacrylique contient de 80 à 99,9% de MAM, encore plus préférentiellement de 85 à 99,5% de MAM, pour respectivement de 0,1 à 20%, avantageusement de 0,5 à 15% d'au moins un co-monomère.

Le co-monomère peut être choisi dans la liste des :

- monomères acryliques de formule $CH_2=CH-C(=O)-O-R_1$ où $R_1$ désigne un atome d'hydrogène, un groupement alkyle en $C_1-C_{40}$ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule $CH_2=C(CH_3)-C(=O)-O-R_2$ où $R_2$ désigne un atome d'hydrogène, un groupement alkyle en $C_2-C_{40}$ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués, l'alpha-méthylstyrène, le monochlorostyrène, le tertbutyl styrène.

Les co-monomères préférés sont les acrylates d'alkyle tels que méthyle, éthyle ou butyle.
Le polymère méthacrylique pourra être avantageusement un copolymère du MAM et d'acrylate d'éthyle.

De préférence, le polymère méthacrylique a une masse moléculaire en poids ($M_w$) comprise entre 70000 et 4000000 g/mol (étalon PMMA).

De son côté, l'homopolymère d'acide lactique est un PLA amorphe possédant moins de 93% d'isomère L acide lactique ; il est notamment disponible dans le commerce sous la référence 2002 D auprès de la société NATURE WORKS. Il peut notamment avoir une masse moléculaire moyenne en nombre Mn comprise entre 20.000 et 100.000 g/mol et un indice de polydispersité allant de 1 à 2.

La composition selon l'invention est transparente ; elle est caractérisée par une transmission lumineuse au moins égale à 90%, de préférence au moins égale à 91 % (norme ASTM D1003) et une valeur de Haze inférieure ou égale à 5% (pourcentage de lumière qui est dévié à plus de 2,5 degré par rapport à la direction de la lumière incidente, ASTM D1003).

La composition selon l'invention possède une fluidité améliorée par rapport au polymère méthacrylique seul ; elle est caractérisée par une fluidité exprimée par un Melt Index selon la norme ISO 1133 allant de 0,5 à 25 g/10 min, de préférence allant de 2 à 15 g/10 min.

La composition selon l'invention présente une résistance au agents fissurants, tels que les alcools, caractérisée par l'absence de fissures après sollicitation à l'isopropanol d'éprouvettes déformées sur support elliptique, selon un test dit « gabarit elliptique ».

Test dit « gabarit elliptique » :

Le test dit « gabarit elliptique » permet d'évaluer la résistance d'un matériau à l'initiation d'une fissure et /ou d'une craquelure vis à vis de l'isopropanol, pris comme référence d'agent fissurant.

Des gabarits sont usinés à partir d'un bloc inox et représentent le quart de la section d'une ellipse dont les demi- axes a et b ont comme valeurs respectives 127 mm et 38,1 mm.

Un échantillon maintenu sur un gabarit dont le rayon de courbure varie, est soumis à un spectre de tensions mécaniques.

La déformation en tout point de l'éprouvette est définie par la fonction mathématique suivante :

$$\varepsilon = 1{,}18 * 10^{-3} * (1 - 5{,}642 * 10^{-5} * x^2)^{-3/2} * t$$

où x représente un point de l'ellipse jusqu'au demi-axe vertical (mm)
t représente l'épaisseur de l'éprouvette (mm)

Une bande de peau chamoisée, dont la longueur couvre l'éprouvette, est placée au centre de l'éprouvette déformée. Ce tissu reste imprégné d'isopropanol pendant la durée du test.

Dès le contact de l'agent fissurant sur l'échantillon déformé, l'endommagement sous forme de craquelure ou fissure apparaît dans la partie la plus déformée de l'éprouvette. La durée de l'essai est fixée à 30 min, temps estimé suffisant pour ne plus créer d'endommagement.

A la fin de l'essai, le tissu est retiré de l'éprouvette et l'analyse visuelle du spécimen permet de repérer la position de la dernière fissure ou dernière craquelure.

Le type d'endommagement, craquelure, fissure, rupture partielle ou complète de l'éprouvette est noté.

*Découpe des éprouvettes :*

Les plaques analysées sont sous forme de plaque compressée de dimension (145*145*1mm).

Les éprouvettes découpées sont de dimension 110*45*1 mm.

L'usinage est réalisé à l'aide d'une fraiseuse numérique Charlyrobot.

3 éprouvettes sont découpées par référence.

*Conditionnement des éprouvettes :*

Les éprouvettes sont conditionnées pendant une nuit à 90°C.

Après 10 minutes de refroidissement à l'air ambiant ; elles sont fixées sur le gabarit elliptique et testées après 10 minutes de pause.

Le liquide d'essai est déposé sur un tissu de 110*15 mm, ce dernier est positionné au centre de l'éprouvette lors du test.

Selon ce test, un matériau présentant un endommagement de type fissure est jugé mauvais en résistance chimique alors qu'un matériau présentant un endommagement de type craquelure est jugé bon en résistance chimique.

Il a été constaté que les propriétés de vieillissement sous UV de la composition selon l'invention permettent également d'envisager son utilisation dans des applications extérieures. De plus, ses propriétés thermiques (exprimées par un Vicat supérieur à 80°C selon la norme ISO 306) sont compatibles avec un large éventail d'applications.

Les propriétés uniques de cette composition la recommandent tout particulièrement pour une utilisation dans la fabrication d'articles ménagers, tels que des capots de téléviseurs, les couvercles des appareils électriques ou électroniques, des écrans plats d'ordinateurs, du mobilier d'intérieur, du mobilier urbain, des articles destinés à l'emballage, notamment dans le domaine de la cosmétique, des pièces automobiles telles que des lentilles de planches de bord, des feux arrières, des pièces d'habillage extérieur, des enseignes lumineuses, des profilés.

La composition de l'invention peut contenir en outre d'autres additifs usuellement employés dans l'industrie des matières plastiques. Par exemple, elle pourra comprendre un modifiant choc, de préférence ayant un indice de réfraction adapté à celui de ladite composition ; un ignifugeant ; un stabilisant thermique ; un lubrifiant ; un colorant et/ou un pigment,organique ou inorganique ; un anti-UV; un anti-oxydant ; un antistatique.

La composition peut être obtenue en mélangeant en voie fondue le polymère méthacrylique et le PLA. On peut utiliser pour cela tout outil de mélange adapté aux thermoplastiques. De préférence, on utilise comme outil de mélange une extrudeuse. A la sortie de l'extrudeuse, on peut récupérer des granulés de la composition ou bien une plaque. On préfère que le mélange de l'homopolymère PLA et du polymère méthacrylique, avantageusement présents chacun sous forme de granulés, soit réalisé dans un co-malaxeur, par exemple de type BUSS, à une température de préférence voisine de 220°C.

La composition selon l'invention peut être transformée avec les techniques habituelles de transformation des thermoplastiques. Elle peut être moulée par injection, extrusion ou co-extrusion.

Le moulage par injection est une technique de fabrication de pièces en grande ou très grande série. Il concerne avant tout les matières plastiques et les élastomères (caoutchoucs). On rencontre des composants moulés par injection dans de très nombreux produits manufacturés : automobile, électroménager, matériel informatique, mobilier.

L'extrusion est un procédé de transformation en continu. On obtient de cette façon des produits de grande longueur : profilés pour portes et fenêtres, canalisations, tubes, joints, plaques, films.

Pour produire des pièces plastiques multicouches, on utilise alors la co-extrusion.

Pour plus de renseignements, on pourra se référer aux Techniques de l'Ingénieur, volume AM2 « Matériaux Non Métalliques : polymères, plasturgie, céramiques, composites ».

Les Exemples suivants illustrent la présente invention sans toutefois en limiter la portée.

Exemples

*Produits utilisés*

- PMMA grade V825 d'Altuglas
- PLA amorphe, grade commercial 2002D de NatureWorks

*Mélanges testés*

Le PLA a été mélangé au PMMA dans une extrudeuse dégazeuse de type BUSS à 230°C dans les proportions massiques de 3%, 23% et 60% par rapport au poids total du mélange.

Les mélanges et le PMMA seul ont été injectés en boucle fermée sur une presse d'injection Billion de 90T de force de fermeture, la température d'injection était de 210°C et la température du moule de 60°C.

*Protocoles des tests réalisés*

Les échantillons ont été soumis à différents tests effectués selon les méthodes indiquées dans le tableau I ci-dessous qui regroupe les résultats obtenus :

Tableau I

| | Norme | Unité | PMMA référence | PMMA/PLA 97/3 comparatif | PMMA/PLA 77/23 selon l'invention | PMMA/PLA 40/60 comparatif |
|---|---|---|---|---|---|---|
| Melt index (fluidité) MI | ISO 1133 | g/10' | 3,4 | 4,4 | 9,4 | 48,4 |

(suite)

| | Norme | Unité | PMMA référence | PMMA/PLA 97/3 comparatif | PMMA/PLA 77/23 selon l'invention | PMMA/PLA 40/60 comparatif |
|---|---|---|---|---|---|---|
| Module d'élasticité en Flexion ou MEF | ISO 178 | MPa | 3396 | 3472 | 3712 | 3685 |
| Test de traction : contrainte au seuil d'écoulement ou RSE | ISO 527-2 | MPa | 20,3 | 25,8 | 45,6 | 52,4 |
| Test de traction : déformation à la rupture | ISO 527-2 | % | 4,1 | 2,7 | 2,3 | 2,6 |
| Propriétés optiques : Haze | ASTM D1003 | % | 0,4 | 0,9 | 3,3 | 9,1 |
| Propriétés optiques : Transmission totale | ASTM D1003 | % | 93,8 | 93,1 | 91,3 | 90,8 |
| Mesure de couleur : Yellow Index | NF ISO 7724 | - | 0,5 | 0,9 | 3,4 | 3,6 |
| Propriétés Thermiques : Vicat | ISO 306 | °C | 107,2 | 101,4 | 88,5 | 72,4 |
| Pencil test | ASTM D3363 | - | H | H | H | HB |
| Résistance à la rayure Ericksen | NFT 51113 | $\mu$m | 84 | 83,7 | 90 | 106,4 |
| Dureté Rockwell | ASTM D785 | MPa | 95,7 | 95,9 | 99 | 99,5 |
| Résistance Chimique (Isopropanol) | Test gabarit elliptique | % | 0,31 | 0,31 | 0,34 | 0,34 |
| Endommagement après résistance chimique | Test gabarit elliptique | - | fissure | fissure | craquelures | craquelures |

Les résultats sur les différents échantillons moulés par compression (1 mm d'épaisseur) sollicités à l'isopropanol ont montré que le PMMA seul ainsi que le mélange PMMA/PLA 97/3 avaient une déformation critique de 0,31 % et s'endommageaient par l'apparition d'une fissure qui rompait complètement l'échantillon, alors que le mélange avec 23% et 60% de PLA possédait une déformation critique de 0,34% et surtout s'endommageait par l'apparition de craquelures fines et multiples sans apparition de fissures. La pièce conservait son intégrité à la fin du test, ce qui est le signe d'une résistance chimique améliorée.

On observe que la composition selon l'invention possède une fluidité améliorée tout en conservant les propriétés essentielles de transparence, rigidité et dureté de surface, compatibles avec un large domaine d'utilisations.

## Revendications

1. Composition transparente, fluide et résistante chimiquement comprenant :

    - de 95% à 50% en poids d'un polymère méthacrylique qui est un homo- ou copolymère du méthacrylate de méthyle (MAM), comprenant en poids au moins 70% de MAM
    - de 5% à 50% en poids d'un homopolymère d'acide lactique (PLA)

sur le poids total de la composition.

**2.** Composition selon la revendication 1 **caractérisée en ce que** la quantité d'homopolymère d'acide lactique va de 15% à 30% en poids, de préférence de 20% à 25% en poids sur le poids total de la composition.

**3.** Composition selon la revendication 1 ou 2 **caractérisée en ce que** la quantité d'homopolymère d'acide lactique est de 23% en poids.

**4.** Composition selon l'une quelconque des revendications précédentes **caractérisée par** une fluidité exprimée par un Melt Index selon la norme ISO 1133 allant de 0,5 à 25 g/10 min, de préférence allant de 2 à 15 g/10 min.

**5.** Utilisation d'une quantité allant de 5 à 50% en poids d'un homopolymère d'acide lactique pour augmenter la fluidité et la résistance chimique d'une matrice de polymère méthacrylique, le poids total de la composition étant 100%, ledit polymère méthacrylique est un homo- ou copolymère du méthacrylate de méthyle (MAM), comprenant en poids au moins 70% de MAM.

**6.** Utilisation de la composition selon l'une des revendications 1 à 4 pour la fabrication d'articles ménagers, tels que des capots de téléviseurs, les couvercles des appareils électriques ou électroniques, des écrans plats d'ordinateurs, du mobilier d'intérieur, du mobilier urbain, des articles destinés à l'emballage, notamment dans le domaine de la cosmétique, des pièces automobiles telles que des lentilles de planches de bord, des feux arrières, des pièces d'habillage extérieur, des enseignes lumineuses, des profilés.

**7.** Procédé de fabrication d'un objet destiné au domaine de l'emballage, de la cosmétique, de l'électronique, de l'électroménager, de l'automobile ou du bâtiment, à partir de la composition selon l'une quelconque des revendications 1 à 4 comprenant une étape de moulage par injection, extrusion ou co-extrusion de ladite composition.

**Patentansprüche**

**1.** Transparente, fließfähige und chemisch beständige Zusammensetzung, umfassend:

- 95 bis 50 Gew.-% eines Methacrylpolymers, bei dem es sich um ein Homo- oder Copolymer von Methylmethacrylat (MMA) mit mindestens 70 Gew.-% MMA handelt,
- 5 bis 50 Gew.-% eines Milchsäure-Homopolymers (PLA),

bezogen auf das Gesamtgewicht der Zusammensetzung.

**2.** Zusammensetzung nach Anspruch 1, **dadurch gekennzeichnet, dass** die Menge an Milchsäure-Homopolymer 15 bis 30 Gew.-% und vorzugsweise 20 bis 25 Gew.-%, bezogen auf das Gesamtgewicht der Zusammensetzung, beträgt.

**3.** Zusammensetzung nach Anspruch 1 oder 2, **dadurch gekennzeichnet, dass** die Menge an Milchsäure-Homopolymer 23 Gew.-% beträgt.

**4.** Zusammensetzung nach einem der vorhergehenden Ansprüche, **gekennzeichnet durch** eine **durch** einen Melt Index gemäß der ISO-Norm 1133 ausgedrückte Fließfähigkeit im Bereich von 0,5 bis 25 g/10 min und vorzugsweise im Bereich von 2 bis 15 g/10 min.

**5.** Verwendung einer Menge im Bereich von 5 bis 50 Gew.-% eines Milchsäure-Homopolymers zur Erhöhung der Fließfähigkeit und der chemischen Beständigkeit einer Methacrylpolymer-Matrix, wobei sich das Gesamtgewicht der Zusammensetzung auf 100% beläuft und es sich bei dem Methacrylpolymer um ein Homo- oder Copolymer von Methylmethacrylat (MMA) mit mindestens 70 Gew.-% MMA handelt.

**6.** Verwendung der Zusammensetzung nach einem der Ansprüche 1 bis 4 zur Herstellung von Haushaltsartikeln wie Gehäusen für Fernsehgeräte, Abdeckungen für elektrische oder elektronische Geräte, Flachbildschirmen für Computer, Innenmöbeln, Stadtmöbeln, Artikeln für die Verpackung, insbesondere auf dem Kosmetiksektor, Autoteilen wie Instrumentenbrettlinsen, Rückleuchten, Außenverkleidungsteilen, Leuchtschildern und Profilen.

7. Verfahren zur Herstellung eines Objekts für den Verpackungs-, Kosmetik-, Elektronik-, Haushaltselektrogeräte-, Auto- oder Bausektor aus der Zusammensetzung nach einem der Ansprüche 1 bis 4, bei dem man die Zusammensetzung spritzgießt, extrudiert oder coextrudiert.

**Claims**

1. Transparent, fluid and chemically resistant composition comprising:

   - from 95% to 50% by weight of a methacrylic polymer which is a methyl methacrylate (MMA) homo- or copolymer, comprising by weight at least 70% MMA
   - from 5% to 50% by weight of a lactic acid homopolymer (PLA) relative to the total weight of the composition.

2. Composition according to Claim 1, **characterized in that** the quantity of lactic acid homopolymer ranges from 15% to 30% by weight, preferably from 20% to 25% by weight relative to the total weight of the composition.

3. Composition according to Claim 1 or 2, **characterized in that** the quantity of lactic acid homopolymer is 23% by weight.

4. Composition according to any one of the preceding claims, **characterized by** a fluidity expressed by a Melt Index according to the ISO 1133 standard ranging from 0.5 to 25 g/10 min, preferably ranging from 2 to 15 g/10 min.

5. Use of a quantity ranging from 5 to 50% by weight of a lactic acid homopolymer to increase the fluidity and the chemical resistance of a methacrylic polymer matrix, the total weight of the composition being 100%, the said methacrylic polymer is a methyl methacrylate (MMA) homo- or copolymer, comprising by weight at least 70% MMA.

6. Use of the composition according to one of Claims 1 to 4, for the manufacture of household items, such as television hoods, covers for electrical or electronic appliances, computer flat screens, interior furniture, street furniture, items intended for packaging, in particular in the cosmetics field, automobile parts such as dashboard lenses, rear lights, external cover parts, illuminated signs, structural sections.

7. Process for the manufacture of an object intended for the packaging, cosmetics, electronics, domestic electrical appliances, automobile or building sector, from the composition according to any one of Claims 1 to 4 comprising a step for injection, extrusion or co-extrusion moulding of the said composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0853588

**Littérature non-brevet citée dans la description**

- **EGUIBURU, J.L. ; IRUIN, J.J. ; FERNANDEZ-BER-RIDI, M.J. ; SAN ROMAN.** *J. Polymer,* 1998, vol. 39 (26), 6891-6897

- **ZHANG, G. ; ZHANG, J. ; WANG, S. ; SHEN, D.** *Journal of Polymer Science: Part B: Polymer Physics,* 2003, vol. 41, 23-30